# EUROPEAN PATENT SPECIFICATION

(11) **EP 0 478 542 B1**
(45) Date of publication and mention of the grant of the patent: **15.09.1993**
(21) Application number: 89907327.4
(22) Date of filing: 21.06.1989
(51) Int. Cl.: B25J 15/00

(54) **ARRANGEMENT FOR PIVOT LINK-FORMING MEANS**
GELENKEINRICHTUNG
AGENCEMENT DE MOYEN FORMANT UNE LIAISON DE PIVOT

(43) Date of publication of application: 08.04.1992
(73) Proprietor: HAUGS, Audun, N-5030 Landas (NO)
(72) Inventor: HAUGS, Audun, N-5030 Landas (NO)
(74) Representative: Bjerre, Nils B.J.
(86) International application number: NO8900064
(87) International publication number: WO9015697

(56) References cited:
- GB-A- 2 100 826
- US-A- 2 929 653
- US-A- 4 792 173
- US-A- 4 815 782

## Description

The present invention relates to an arrangement of pressure medium (hydraulically or pneumatically) operated power means manufactured of a flexible hollow wall material and provided with a longitudinal row of hollow mutually spaced internal pocket formations and a corresponding longitudinal row of bracing formations, said pocket formations are connected to a pressure medium source and a pressure release source though an associated pressure medium conduit and internal ducts and each pocket formation is arranged to be inflated, i.e. loaded with pressurised fluid to provide an convexely expanded deformation of the pocket formation wall material.

An arrangement of the above stated art is shown in US-A-4 815 782 in the shape of a grappling device comprising an elastic arm formed from a closed ended, inflatable tube having a plurality of generally parallell, longitudinally spaced inelastic bands disposed therearound for limiting the radial elstic distension of the arm when inflated. A longitudinally inelastic, laterally flexible band disposed on a surface of the arm causes the arm, when inflated to wrap around an object to be gripped. The inflatable elastic arm is provided with longitudinally and laterally extendable cells of elastic wall material. The elastic extension of the inflatable arm is limited by the longitudinally extending inelastic band and the longitudinally spaced inelastic bands. The extent of the inflation of the arm, as limited by the inelastic bands, determines the gripping force and the geometry of the device. The gripping force is solely based on a corresponding extension of the elastic arm caused by its elastic cells.

The present invention is intended for use in a number of different practical embodiments, such as in a contracting apparatus, in a bending apparatus or in a gripping apparatus or in combinations thereof. In other words the power means of the present invention is not limited to a sole gripping and holding operation, but can also in general be employd in different types of force excerting apparatuses for stretching, bending, clamping and similar operations.

The main aim of the present invention is to provide a power means which is contractable in longitudinal direction upon inflation, in contrast to a power means which is extendable upon inflation. A further aim of the invention is to provide a simple and simultaneously powerful power means construction arranged to be incorporated in a robot arm mechanism and in different other types of operating mechanisms.

The arrangement of the present invention is characterised in that the pocket formations and the bracing formations are integrated in one and the same flexible, reinforced wall material, that each pocket formation is shaped of two mutually superposed rather thin walled wallings which are circumferentially surrounded by and circumferentially limited by a common rather thick walled bracing formation, and that the power means is adjustable from stretched to contracted state by pressurising the pocket formations to provide an convexely expanded deformation of the pocket formation wall material and a resulting laterally and longitudinally contracted deformation in the associated bracing formations.

The result of inflating the power means of the present invention is that the power means contract in longitudinal direction thereof, caused by local expensions of the power means in a direction crosswise to the longitudinal direction thereof. Accordingly, in an arrangement of the present invention the power means provides a contractable, rather simple constructional solution based on the principle of contraction caused by inflation thereof. An advantage of such solution is that the power means can be included in a simple one-piece construction arrangement and that it as such one-piece construction arrangement is allowed to be incorporated in a simple manner in different operating tools for different operation purposes. The power means is also allowed to accumulate therein a great operating force to be used for different powerful contraction purposes. This latter is achieved by using a power means made of flexible, reinforced wall material.

Further features of the present invention will be evident from the following description having regard to the accompanying drawings, in which:
Fig. 1 shows in part a member of an arrangement according to the invention, illustrated in a plan representation in its simplest form and shown in an inactive position.
Fig. 2 shows the arrangement according to Fig. 1 illustrated in vertical section.
Fig. 3 shows the arrangement according to Fig. 1 and 2 in a pressure-loaded condition.
Fig. 4 shows the arrangement according to Fig. 3 illustrated in vertical section.
Fig. 5 and 6 show in a corresponding representation and section to Fig. 3 and 4 an alternative construction of the arrangement in a pressure-loaded condition.
Fig. 7 and 8 show in longitudinal section a third construction of the arrangement, illustrated respectively in straightened out and in bent condition.
Fig. 9 shows the arrangement according to the invention according to a fourth construction illustrated schematically in perspective view.

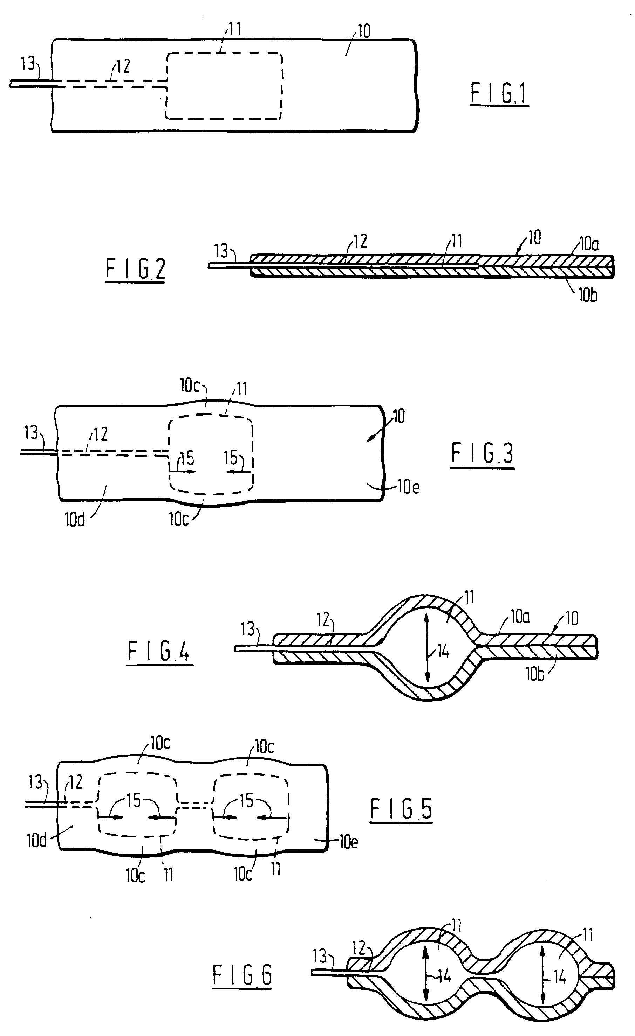

In Fig. 1 and 2 there is shown a wall material 10 of for example reinforced, vulcanised rubber material (or similar flexible material), consisting of an external wall layer 10a and an internal wall layer 10b, having a locally defined intermediate pocket formation 11 and an associated guide duct 12 together with compressed air conduit 13.

In Fig. 3 and 4 pocket formation 11 of the wall material 10 is shown in a pressure-loaded condition. As a result of the inflation of the pocket formation 11 contraction of the material 10d is obtained relative to the material 10e on oppsite sides of the pocket formation 11 and an equivalent close packing together of the material along longitudinal side edges 10c of the pocket formation.

By means of said contraction of wall material of the arrangement a lateral local bulging of the wall material can be produced as shown by arrows 14 with an equivalent local longitudinal contraction of the arrangement as indicated by the arrows 15.

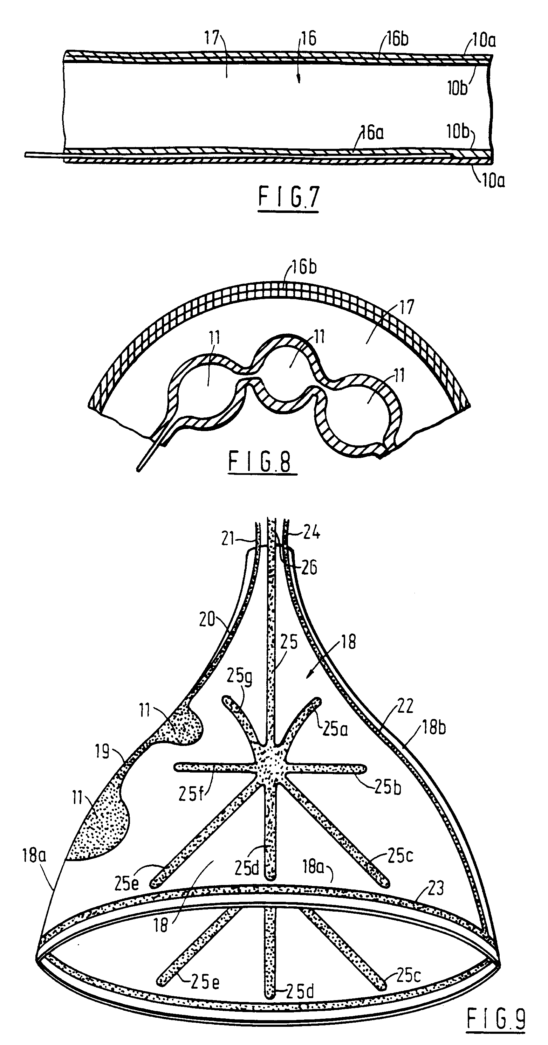

In Fig. 5 and 6 there is illustrated a solution as shown correspondingly in Fig. 3 and 4 with the only difference that two pocket formations 11 coupled in series are employed instead of the one illustrated in Fig. 3 and 4. By the solution according to Fig. 5 and 6 it is evident that a contraction is obtained twice as big as in the solution according to Fig. 1-4.

In fig. 7 and 8 there are employed three pocket formations 11 coupled in series on the one side 16a of a pipe-shaped body 16 made of a material as shown correspondingly in Fig. 1-4 (and in Fig. 5 and 6). The said pocket formations 11 are arranged longitudinally in rows palallel to the longitudinal axis of the body, that is to say in a relatively restricted strip-shaped portion on one side 16a of the body. This strip-shaped portion can constitute the portion of the first type recited in the introdution of the specification and in the claims. The remaining wall portion of the body is composed of an equivalent material, made up of said two layers 10a and 10b, and can constitute the second type of wall portion as recited in the introduction of the specification and in the claims. By inflating the pocket formations 11 on the one side 16a of the body a contraction is obtained of one side 16a of the body, while a bending of the opposite side 16b of the body is correspondingly produced. The result is the production of a bending curvature of about 90°C.

By discharging the pressure in the pocket formations 11 according to Fig. 7 and 8 the body 16 is adapted to be returned from the position in Fig. 8 to the original condition as shown in Fig. 7 by means of the inherent elastic forces which are produced in the position according to Fig. 8. By a simple pressure medium loading of the pocket formations 11 there can be obtained by this an effective bending of the body 16 from the position illustrated in Fig. 7 to the position illustrated in Fig. 8 and similarly by a simple pressure medium discharge of the pocket formations a straightening out for the body again to the original conditions as shown in Fig. 7.

The source of pressure medium and control means in connection with the same is not shown further herein, since such equipment is well known to the skilled person and does not need to represent any problems.

Even if it is not expressly illustrated herein, it is apparent that the hollow space 17 within the pipe-shaped body can if necessary be pressure medium loaded according to need and desire, more or less independently of the pressure medium loading of the pocket formations. Alternatively, by for example using the body as a robot arm, the hollow space 17 can receive conduits to an aggregate which is to cooperate with the robot arm or is carried by the robot arm. It is also possible to receive different types of filling material in said hollow space, for example foam material or other material which has the possibility of being deformed to a certain degree, but then controlled in a certain manner. It is also possible to employ additional bracing means, if desired linked, longitudinal bracing means or annular bracing means for local bracing of the hollow space.

In Fig. 9 there is shown an alternative construction where the arrangement has the form of a funnel-shaped body 18. Purely schematically there are shown on the one side 18a of the body 18 two pocket formations 11 which are arranged longitudinally in a row in the body 18 and are connected in series with each other via a duct 19 and are connected to a common pressure medium duct 20 and a common pressure medium conduit 21. On the opposite side 18b of the body there is shown a duct 22 which runs longitudinally in the body 18 and which communicates with an annular duct 23 at the widest, free outer end 18d of the body 18. At 24 there is shown a pressure medium conduit which is physically separated from the pressure medium conduit 21 and which can be supplied with pressure medium separately. In the region 18c (a region 18c on each opposite side of the body) between the two opposite sides 18a and 18b there is arranged a duct 25 which branches off in the shape of a star as shown at 25a-25g over large portions of the region 18c. The duct 25 is supplied with pressure medium separately via a third pressure medium conduit 26.

By pressure loading the ducts 22 and 25 via the associated pressure medium conduits 24 and 26a dilation of the funnel-shaped body 18 can be obtained, such as shown in Fig. 9. In addition by pressure loading the pocket formations 11 via the pressure medium conduit 21, a contraction can be obtained locally in one side of the body 18. This will involve the free outer end 18d of the body being turned with the opening towards the left in Fig. 9, with the funnel shape maintained unaltered or substantially unaltered with the exception of one longitudinally contracted side 18a of the body.

By pressure loading the ducts 19 and 25 and pressure discharging the duct 23 the opening at the free outer end of the body can be deformed to a greater or lesser degree as required at the same time as the body remaining is deformed in a set manner determined by the duct 25 with the branchings 25a-25g on each opposite side of the body.

By pressure loading the ducts 19 and 23 and pressure discharging the ducts 25 (on opposite sides of the body) or only pressure discharging the one of the ducts 25, the shape of the body 18 can be correspondingly regulated while the opening at the free outer end of the body is kept relatively uniformly dilated.

Consequently it is possible by means of separate pressure medium supply and pressure medium discharge to move and change the shape of the body 18, so that this can carry out various desired working operations as a gripping or holding member or as a carrying member for another connected aggregate besides. The aggragate can for example be shieldably received within the body 18. By pivoting the opening of the body 18 the aggregate can then be pivoted similarly.

Instead of the illustrated funnel shape for the body 18 a body can be employed with a cylindrical shape of with a multi-edged (three, four edged etc.) elliptically shaped or other cross-sectional form, where the shape can govern in which direction the body is to be bent or altered in shape in another way.

## Claims

1. An arrangement of pressure medium (hydraulically or pneumatically) operated power means (16) manufactured of a flexible hollow wall material and provided with a longitudinal row of hollow mutually spaced internal pocket formations (11) and a corresponding longitudinal row of bracing formations (10c), said pocket formations (11) are connected to a pressure medium source and a pressure release source though an associated pressure medium conduit (13) and internal ducts (12) and each pocket formation (11) is arranged to be inflated, i.e. loaded with pressurised fluid to provide an convexely expanded deformation of the pocket formation wall material, characterised in that the pocket formations (11) and the bracing formations (10c) are integrated in one and the same reinforced flexible wall material, that each pocket formation is shaped of two mutually superposed rather thin walled wallings which are circumferentially surrounded by and circumferentially limited by a common rather thick walled bracing formation (10c), and that the power means (16) is adjustable from stretched to contracted state by pressurising the pocket formations to provide an convexely expanded deformation of the pocket formation wall material and a resulting laterally and longitudinally contracted deformation in the associated bracing formations (10c).

2. Arrangement in accordance with claim 1, characterised in that the wall material of the power means (16) is made of an inner (10b) and an outer (10a) layer which are mutually connected in said bracing formations (10c), and that the pocket formations (11) and associated ducts (12) are located in a limited section between said layers.

3. Arrangement in accordance with claim 1, characterised in that the power means (16) is incorporated in the wall material of a tube shaped member (Figs. 7 and 8) in one side portion thereof for bending of the member to a curved or folded contour.

4. Arrangement in accordance with claim 1, characterised in that the power means (16) is incorporated in the wall material of a bell shaped member (fig. 9) for altering the outline of the member relative to a main plane through the member.

## Patentansprüche

1. Anordnung einer mit einem Druckmedium (hydraulisch oder pneumatisch) betriebenen Krafteinrichtung (16), die aus einem flexiblen hohlen Wandmaterial hergestellt und mit einer Längsreihe von hohlen, voneinander beabstandeten inneren Taschenausbildungen (11) und einer entsprechenden Längsreihe von Aussteifungsausbildungen (10c) versehen ist, wobei die Taschenausbildungen (11) über eine dazugehörige Druckmediumleitung (13) und innere Kanäle (12) mit einer Druckmediumquelle und einer Druckabzugsquelle verbunden sind und jede Taschenausbildung (11) so ausgelegt ist, daS sie aufgeblasen, das heißt mit einem verdichteten Fluid beladen werden kann, um für eine konvex ausgedehnte Verformung des Wandmaterials der Taschenausbildung zu sorgen, dadurch gekennzeichnet, daß die Taschenausbildungen (11) und die Aussteifungsausbildungen (10c) in ein- und dasselbe verstärkte flexible Wandmaterial integriert sind, daß jede Taschenausbildung aus zwei übereinander angeordneten, ziemlich dünnwandigen Wandungen geformt ist, die in Umfangsrichtung von einer gemeinsamen, ziemlich dickwandigen Aussteifungsausbildung (10c) umgeben und in Umfangsrichtung von dieser begrenzt sind, und daß die Krafteinrichtung (16) aus einem gedehnten in einen kontrahierten Zustand einstellbar ist, und zwar durch Druckbeaufschlagung der Taschenausbildungen derart, daß für eine konvex ausgedehnte Verformung des Wandmaterials der Taschenausbildung und eine daraus resultierende seitlich und länglich kontrahierte Verformung in den dazugehörigen Versteifungsausbildungen (10c) gesorgt wird.

2. Anordnung nach Anspruch 1, dadurch gekennzeichnet, daß das Wandmaterial der Krafteinrichtung (16) aus einer inneren (10b) und äußeren (10a) Schicht hergestellt ist, die in den Versteifungsausbildungen gegenseitig verbunden sind, und daß sich die Taschenausbildungen (11) und die dazugehörigen Kanäle (12) in einem begrenzten Abschnitt zwischen den genannten Schichten befinden.

3. Anordnung nach Anspruch 1, dadurch gekennzeichnet, daß die Krafteinrichtung (16) in das Wandmaterial eines rohrförmigen Elements (Figuren 7 und 8) in einen Seitenbereich desselben eingegliedert ist, nämlich zum Biegen des Elements in eine gebogene oder gefaltete Kontur.

4. Anordnung nach Anspruch 1, dadurch gekennzeichnet, daS die Krafteinrichtung (16) in das Wandmaterial eines glockenförmigen Elements (Figur 9) eingegliedert ist, nämlich zur Änderung des Umrisses des Elements relativ zu einer Hauptebene durch das Element.

## Revendications

1. Ensemble à dispositif moteur (16) commandé par un fluide sous pression (hydraulique ou pneumatique), fabriqué à partir d'une matière de paroi souple et creuse et ayant une rangée longitudinale de poches internes conformées (11) espacées les unes des autres et une rangée longitudinale correspondante d'organes conformés (10c) de renforcement, les poches conformées (11) étant raccordées à une source de fluide sous pression et à une source d'évacuation de pression par un conduit associé (13) de fluide sous pression et des canalisations internes (12) et chaque poche conformée (11) étant destinée à être gonflée, c'est-à-dire chargée de fluide sous pression afin qu'elle provoque une déformation à dilatation convexe de la matière de la paroi des poches conformées, caractérisé en ce que les poches conformées (11) et les organes conformés (10c) de renforcement sont intégrés dans une seule et même matière de paroi souple armée, en ce que chaque poche conformée a une configuration formée par deux enceintes superposées à paroi relativement mince qui sont entourées et limitées circonférentiellement par un organe conformé commun (10c) de renforcement à paroi relativement épaisse, et en ce que le dispositif moteur (16) est ajustable entre des états allongé et contracté par mise sous pression des poches conformées afin que la matière des parois des poches conformées subisse une déformation par dilatation convexe et que les organes conformés associés (10c) de renforcement subissent une déformation résultante par contraction longitudinale et latérale.

2. Ensemble selon la revendication 1, caractérisé en ce que la matière de la paroi du dispositif moteur (16) comporte une couche interne (10b) et une couche externe (10a) qui sont raccordées dans les organes conformés (10c) de renforcement, et en ce que les poches conformées (11) et les canalisations associées (12) sont placées dans une section limitée entre les couches.

3. Ensemble selon la revendication 1, caractérisé en ce que le dispositif moteur (16) est incorporé dans la matière de la paroi d'un organe en forme de tube (figures 7 et 8) dans une partie latérale de celui-ci afin que l'organe puisse fléchir en prenant une forme courbe ou repliée.

4. Ensemble selon la revendication 1, caractérisé en ce que le dispositif moteur (16) est incorporé dans la matière de la paroi d'un organe (figure 9) en forme de cloche afin que la configuration de l'organe par rapport à un plan principal passant par cet organe soit modifiée.
